# EUROPÄISCHE PATENTSCHRIFT

(11) **EP 1 965 105 B1**
(45) Veröffentlichungstag und Bekanntmachung des Hinweises auf die Patenterteilung: **21.11.2012**
(21) Anmeldenummer: 07023793.8
(22) Anmeldetag: 07.12.2007
(51) Int. Cl.: F16J 15/06, F01M 11/04

(54) **Dichtungsanordnung**
Seal arrangement
Agencement d'étanchéification

(30) Priorität: 27.02.2007 DE 102007009488
(43) Veröffentlichungstag der Anmeldung: 03.09.2008
(73) Patentinhaber: ElringKlinger AG, 72581 Dettingen (DE)
(72) Erfinder: Franz, Ralf, 72574 Bad Urach (DE); Schrade, Marco, 72534 Hayingen (DE)
(74) Vertreter: Hoeger, Stellrecht & Partner Patentanwälte

(56) Entgegenhaltungen:
- EP-A- 0 358 896
- WO-A-01/83954
- DE-A1- 4 322 727
- DE-A1- 10 105 625
- DE-U1-202006 013 626
- US-A- 3 387 621
- US-A- 6 052 896
- US-A1- 2006 054 402

## Beschreibung

Die vorliegende Erfindung betrifft eine Dichtungsanordnung zum Abdichten einer Durchtrittsöffnung in einer Wandung eines Motorbauteils, umfassend ein Einsatzelement zum Einsetzen in die Durchtrittsöffnung, wobei das Einsatzelement einen Durchgangskanal aufweist, welcher durch ein Verschlusselement verschließbar ist, und ein Dichtelement zum Abdichten zwischen dem Einsatzelement und dem Motorbauteil.

Solche Dichtungsanordnungen sind bekannt.

Insbesondere ist eine Dichtungsanordnung zum Abdichten einer Durchtrittsöffnung in einer Wandung einer Ölwanne bekannt, welche ein Gewinde-Einsatzelement zum Einsetzen in die Durchtrittsöffnung umfasst, wobei das Gewinde-Einsatzelement einen Durchgangskanal für den Durchtritt von Motoröl aus der Ölwanne aufweist, welcher durch eine Ölablassschraube verschließbar ist, und wobei ferner ein Dichtring aus einem Elastomermaterial in einer Ringnut an einer Umfangsfläche des im Wesentlichen hohlzylindrischen Gewinde-Einsatzelements angeordnet ist, um einen Dichtspalt zwischen dem Gewinde-Einsatzelement und einer Begrenzungswand der Durchtrittsöffnung in der Ölwanne in radialer Richtung abzudichten.

Diese Radialabdichtungsanordnung benötigt eine genau gearbeitete Durchtrittsöffnung in der Ölwanne, um eine ausreichende Abdichtung zwischen dem Gewinde-Einsatzelement einerseits und der Ölwanne andererseits zu erzielen.

Die US 2006/054402 A1, die US 6 052 896 A, die DE 20 2006 013626 U1, die US 3 387 621 A und die EP 0 358 896 A offenbaren Dichtungsanordnungen gemäß dem Oberbegriff von Anspruch 1.

Der vorliegenden Erfindung liegt die Aufgabe zugrunde, eine Dichtungsanordnung der eingangs genannten Art zu schaffen, welche auch bei niedrigem Fertigungsaufwand eine ausreichende Dichtwirkung aufweist.

Diese Aufgabe wird durch eine Dichtungsanordnung nach Anspruch 1 gelöst.

Der erfindungsgemäßen Dichtungsanordnung liegt somit das Konzept zugrunde, statt des radial abdichtenden Dichtelements ein axial abdichtendes Dichtelement zu verwenden.

Die Axialabdichtung bietet den Vorteil, dass die gewünschte Abdichtwirkung auch dann erzielt wird, wenn die Durchtrittsöffnung in dem Motorbauteil eine hohe Maßtoleranz aufweist.

Der Fertigungsaufwand und die für die Herstellung der Dichtungsanordnung aufzuwendenden Kosten werden dadurch deutlich reduziert.

Dabei kann eine mindestens ebenso gute oder sogar eine bessere Dichtwirkung als bei der bekannten Radialabdichtung erzielt werden.

Der Begriff Motorbauteil, wie er in dieser Beschreibung und den beigefügten Ansprüchen verwendet wird, umfasst nicht nur die unmittelbar den Motor bildende Bauteile oder die unmittelbar hiermit verbundenen Bauteile, sondern auch alle mit dem Motor in Wirkverbindung stehenden Bauteile, insbesondere die Bauteile eines mit dem Motor verbundenen Getriebes.

Bei dem Motor handelt es sich vorzugsweise um den Verbrennungsmotor eines Kraftfahrzeuges.

Bei der erfindungsgemäßen Dichtungsanordnung liegt das Dichtelement im montierten Zustand der Dichtungsanordnung vorzugsweise an einer Dichtfläche des Einsatzelements an, welche quer zur Axialrichtung des Einsatzelements ausgerichtet ist.

Die Axialrichtung des Einsatzelements kann insbesondere eine Symmetrieachse des Einsatzelements sein.

Besonders günstig ist es, wenn die Dichtfläche des Einsatzelements im wesentlich senkrecht zur Axialrichtung des Einsatzelements ausgerichtet ist.

Ferner ist vorzugsweise vorgesehen, dass das Dichtelement im montierten Zustand der Dichtungsanordnung an einer Dichtfläche des Einsatzelements anliegt, deren mittlere Oberflächennormale im wesentlichen parallel zur Axialrichtung des Einsatzelements ausgerichtet ist.

Wenn die Dichtfläche des Einsatzelements eben ausgebildet ist, so weisen die Oberflächennormalen an jedem Punkt der Dichtfläche in dieselbe Richtung, so dass die Richtung der mittleren Oberflächennormalen mit der Richtung der lokalen Oberflächennormalen an jedem Punkt der Dichtfläche übereinstimmt.

Bei einer bevorzugten Ausgestaltung der Erfindung ist vorgesehen, dass das Einsatzelement einen Grundkörper und einen in radialer Richtung von dem Grundkörper abstehenden Bund umfasst.

Der Grundkörper kann insbesondere im wesentlichen hohlzylindrisch ausgebildet sein.

Als besonders günstig hat es sich erwiesen, wenn das Dichtelement im montierten Zustand der Dichtungsanordnung an dem Bund anliegt.

Ferner ist vorgesehen, dass das Dichtelement im montierten Zustand der Dichtungsanordnung zumindest teilweise an einer an dem Motorbauteil vorgesehenen Ausnehmung, nämlich einer Nut, angeordnet ist.

Das Dichtelement kann insbesondere ringförmig geschlossen ausgebildet sein.

Ferner kann vorgesehen sein, dass das Dichtelement als Profil-Dichtelement ausgebildet ist, d.h. ein längs einer Längsrichtung des Dichtelements im Wesentlichen konstantes Profil aufweist.

Dieses Profil kann insbesondere ein 0-Profil, ein Doppel-T-Profil oder ein Rechteck- oder Block-Profil sein. Bei einer bevorzugten Ausgestaltung der Erfindung ist das Dichtelement ein separat von dem Einsatzelement ausgebildetes Element.

Alternativ oder ergänzend hierzu kann auch vorgesehen sein, dass das Dichtelement an das Motorbauteil angeformt ist.

Ferner wäre es auch denkbar, das Dichtelement an das Einsatzelement anzuformen.

Um das Dichtelement im montierten Zustand der Dichtungsanordnung unter elastischer Vorspannung an den Dichtflächen des Einsatzelements und des Motorbauteils anliegen lassen zu können, ist das Dichtelement vorzugsweise elastisch verformbar ausgebildet.

Insbesondere kann vorgesehen sein, dass das Dichtelement ein Elastomermaterial umfasst, vorzugsweise ganz aus einem Elastomermaterial gebildet ist.

So kann das Dichtelement beispielsweise einen Fluor-Kautschuk (FPM), einen Ethylen-Acrylat-Kautschuk (AEM), einen Polyacrylat-Kautschuk (ACM) und/oder einen Silikon-Kautschuk (MVQ) umfassen.

Das Einsatzelement kann ein metallisches Material umfassen, vorzugsweise ganz aus einem metallischen Material gebildet sein.

Als besonders günstig hat es sich erwiesen, wenn das Einsatzelement Messing umfasst.

Bei einer bevorzugten Ausgestaltung der Erfindung ist vorgesehen, dass der Durchgangskanal des Einsatzelements mit einem Gewinde versehen ist. Dies ermöglicht es, das Einsatzelement in einfacher Weise mit einem mit einem komplementären Gewinde versehenen Verschlusselement zu verbinden.

Bei einer bevorzugten Ausgestaltung der Erfindung ist vorgesehen, dass die Dichtungsanordnung ein Verschlusselement zum Verschließen des Durchgangskanals des Einsatzelements umfasst.

Ein solches Verschlusselement kann insbesondere mit einem Gewinde versehen sein. Dies ermöglicht es, das Verschlusselement in einfacher Weise mit einem Einsatzelement zu verbinden, welches ein hierzu komplementäres Gewinde aufweist.

Das Verschlusselement kann insbesondere als eine Verschlussschraube ausgebildet sein.

Um eine ausreichende Abdichtung zwischen dem Verschlusselement und dem Einsatzelement zu erzielen, kann vorgesehen sein, dass das Verschlusselement mit einem Abdichtelement zum Abdichten zwischen dem Verschlusselement und dem Einsatzelement versehen ist.

Das Verschlusselement kann ein metallisches Material umfassen, vorzugsweise ganz aus einem metallischen Material gebildet sein.

Insbesondere kann vorgesehen sein, dass das Verschlusselement ein Stahlmaterial umfasst.

Das Motorbauteil kann ein Kunststoffmaterial umfassen, vorzugsweise ganz aus einem Kunststoffmaterial gebildet sein.

Insbesondere kann vorgesehen sein, dass das Motorbauteil Polyamid (PA) umfasst.

Das Motorbauteil kann insbesondere als eine Motorölwanne, als eine Getriebeölwanne oder als eine Zylinderkopfhaube ausgebildet sein.

Das Motorbauteil kann als ein Aufnahmebehälter für eine Flüssigkeit, beispielsweise Motoröl oder Getriebeöl, ausgebildet sein.

Die Durchtrittsöffnung in dem Motorbauteil kann zur Entnahme von Flüssigkeit aus dem Motorbauteil und/oder zum Zuführen von Flüssigkeit zu dem Motorbauteil dienen.

Eine besonders haltbare Verbindung zwischen dem Einsatzelement und dem Motorbauteil wird erzielt, wenn das Einsatzelement durch Warmeinbettung mit dem Motorbauteil verbunden ist.

Das im montierten Zustand der Dichtungsanordnung in Axialabdichtungsanordnung an dem Einsatzelement anliegende Dichtelement kann in eine Ausnehmung an dem Motorbauteil eingelegt werden, bevor das Einsatzelement in die Durchtrittsöffnung des Motorbauteils eingeführt und mit dem Motorbauteil verbunden wird.

Anders als bei der herkömmlichen Radialabdichtungsanordnung muss das Dichtelement also nicht zusammen mit dem Einsatzelement in die Durchtrittsöffnung des Motorbauteils eingeführt werden, so dass eine Schädigung oder Verformung des Dichtelements aufgrund von Reibung an der Begrenzungswand der Durchtrittsöffnung des Motorbauteils ausgeschlossen ist.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen Längsschnitt durch einen Bodenbereich einer Ölwanne mit einem durch eine Ablassschraube verschlossenen Ablasskanal, wobei die Ablassschraube in ein in den Ablasskanal eingesetztes Gewinde-Einsatzelement eingedreht ist;
- Fig. 2: eine vergrößerte Darstellung des Bereichs I aus Fig. 1, jedoch ohne die Ablassschraube; und

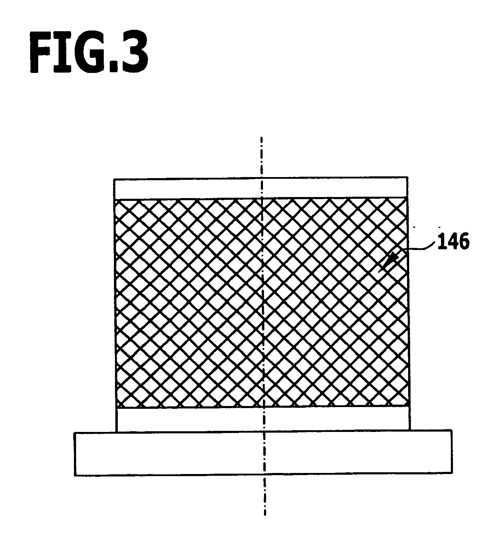

- Fig. 3: eine schematische Seitenansicht des Gewinde-Einsatzelements aus den Fig. 1 und 2.

Gleiche oder funktional äquivalente Elemente sind in allen Figuren mit denselben Bezugszeichen bezeichnet.

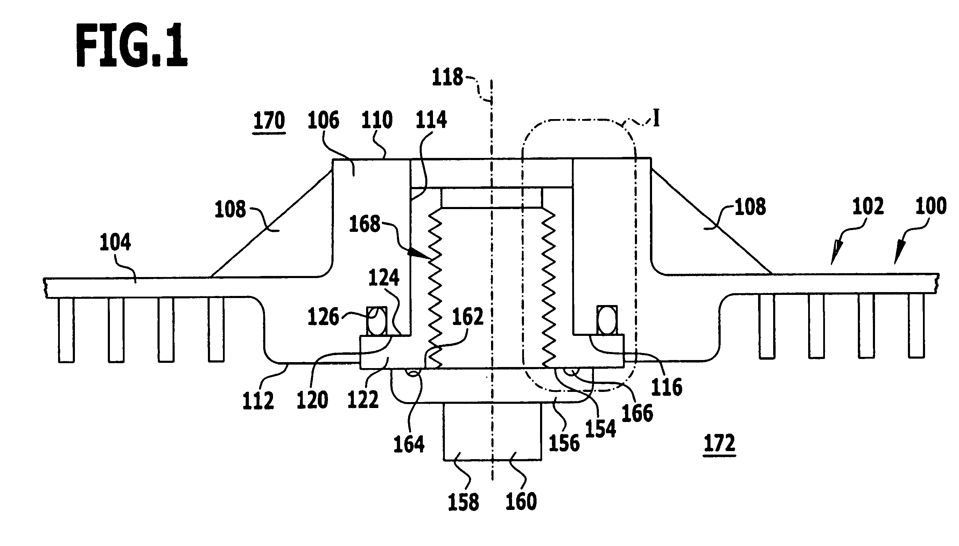

Ein in Fig. 1 ausschnittsweise dargestelltes Motorbauteil 100 in Form einer Ölwanne 102 umfasst eine Bodenwandung 104 mit einem im wesentlichen zylindrischen, verdickten Ablassbereich 106, der durch dreieckige Stützen 108 abgestützt ist.

Der Ablassbereich 106 wird von seiner Oberseite 110 bis zu seiner Unterseite 112 von einer zylindrischen Durchtrittsöffnung 114 durchsetzt, deren Radius sich an einem Absatz 116 im unteren Bereich der Durchtrittsöffnung 114 erweitert.

Der Absatz 116 weist eine im wesentlichen senkrecht zu einer Axialrichtung 118 der Durchtrittsöffnung 114 ausgerichtete Anlagefläche 120 auf, an welcher ein Einsatzelement 122 mit einer Dichtfläche 124 flächig anliegt.

Im Bereich der Anlagefläche 120 ist das Motorbauteil 100 mit einer ringförmigen Nut 126 mit einem im wesentlichen rechteckigen Querschnitt versehen.

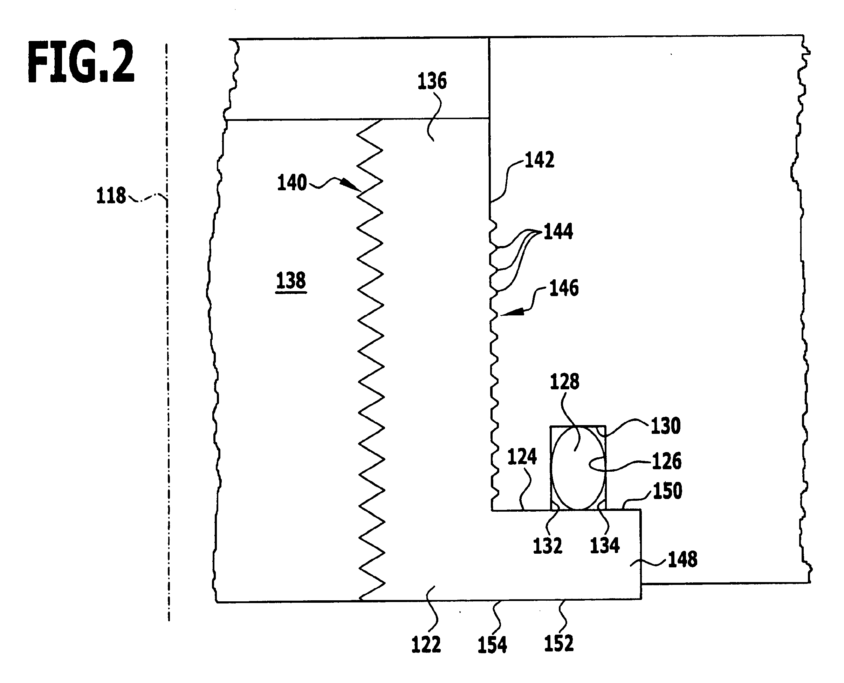

Wie am besten aus der vergrößerten Darstellung der Fig. 2 zu ersehen ist, ist in der ringförmigen Nut 126 ein ebenfalls ringförmiges Dichtelement 128 aufgenommen, welches einerseits an der Dichtfläche 124 des Einsatzelements 122 und andererseits an einer Nutgrundfläche 130 der ringförmigen Nut 126 unter elastischer Vorspannung abdichtend anliegt.

Das Dichtelement 128 kann ferner an einer der beiden einander gegenüberliegenden Nutseitenflächen 132, 134 oder auch an beiden dieser Nutseitenflächen 132, 134 jeweils unter elastischer Vorspannung abdichtend anliegen.

Statt eines 0-förmigen Profils kann das Dichtelement 128 auch ein beliebiges anderes Profil aufweisen, insbesondere ein Doppel-T-Profil, ein X-Profil, ein Y-Profil oder ein Rechteck- oder Block-Profil.

Im Fall eines Rechteck- oder Block-Profils kann das ringförmige Dichtelement 128 die ringförmige Nut 126 im wesentlichen vollständig ausfüllen und flächig an der Nutgrundfläche 130, an den beiden Nutseitenflächen 132, 134 und an der Dichtfläche 124 des Einsatzelements 122 abdichtend anliegen.

Das Einsatzelement 122 umfasst einen im wesentlichen hohlzylindrischen Grundkörper 136, welcher einen in der gemeinsamen Axialrichtung 118 des Einsatzelements 122 und der Durchtrittsöffnung 114 des Ablassbereichs 106 verlaufenden Durchgangskanal 138 umschließt und mit einem Innengewinde 140 versehen ist.

Der Grundkörper 136 des Einsatzelements 122 ist an seiner Außenseite 142 mit Unebenheiten 144 in Form einer Rändelung 146 versehen, um eine bessere Verzahnung mit und einen besseren Halt an der Begrenzungswand der Durchtrittsöffnung 114 des Ablassbereichs 106 zu erzielen.

An seinem unteren Ende weist das Einsatzelement 122 einen in radialer Richtung von dem Grundkörper 136 abstehenden Bund 148 auf, dessen obere Stirnseite 150, welche im wesentlichen senkrecht zur Axialrichtung 118 des Einsatzelements 122 verläuft, die Dichtfläche 124 zum Anlegen des Einsatzelements 122 an das Dichtelement 128 bildet.

Die untere Stirnseite 152 des Bundes 148, welche ebenfalls im wesentlichen senkrecht zur Axialrichtung 118 des Einsatzelements 122 ausgerichtet ist, bildet eine Abdichtfläche 154, an welcher ein Schraubenkopf 156 einer als Verschlusselement 158 dienenden Ablassschraube 160 mit einer Abstützfläche 162 flächig anliegt.

Im Bereich der Abstützfläche 162 ist der Schraubenkopf 156 mit einer Ringnut 164 versehen, in welche ein ringförmiges Abdichtelement 166 aus einem Elastomermaterial eingelegt ist.

Wenn die Ablassschraube 160 mit ihrem Außengewinde 168 in das Innengewinde 140 des Einsatzelements 122 vollständig eingedreht ist, liegt das Abdichtelement 166 unter elastischer Vorspannung einerseits am Schraubenkopf 156 und andererseits an der Abdichtfläche 154 am Bund 148 des Einsatzelements 122 abdichtend an.

Durch Herausdrehen der Ablassschraube 160 aus dem Innengewinde 140 des Einsatzelements 122 kann der Durchgangskanal 138 des Einsatzelements 122 geöffnet werden, um ein flüssiges Medium, insbesondere Öl, aus einem Innenraum 170 des Motorbauteils 100 in dessen Außenraum 172 abzulassen.

Das Verschlusselement 158 ist vorzugsweise aus einem metallischen Material, insbesondere aus einem Stahlmaterial, gebildet.

Das Einsatzelement 122 ist ebenfalls vorzugsweise aus einem metallischen Material, vorzugsweise aus Messing, gebildet.

Das ringförmige Dichtelement 128 ist vorzugsweise aus einem Elastomermaterial, beispielsweise aus einem Fluor-Kautschuk (FPM), einem Ethylen-Acrylat-Kautschuk (AEM), einem Polyacrylat-Kautschuk (ACM) oder aus einem Silikon-Kautschuk (MVQ), gebildet.

Das Motorbauteil 100, insbesondere die Ölwanne 102, ist vorzugsweise aus einem Kunststoffmaterial, beispielsweise aus einem Polyamid, gebildet.

Das Motorbauteil 100 ist vorzugsweise ein Spritzgießteil, das durch einen Spritzgießvorgang aus einem geeigneten Kunststoffmaterial gebildet wird.

Das Einsatzelement 122 wird mit diesem Spritzgießteil durch einen Warmeinbettungsvorgang verbunden.

Hierzu wird das Einsatzelement 122 auf eine Temperatur von beispielsweise ungefähr 350°C erwärmt und unter erhöhtem Druck in die Durchtrittsöffnung 114 des Motorbauteils 100 eingepresst, deren ursprünglicher Innendurchmesser geringfügig kleiner ist als der Außendurchmesser des Grundkörpers 136 des Einsatzelements 122.

Durch diese Warmeinbettung wird die Außenseite des Einsatzelements 122 mit der Begrenzungswand der Durchtrittsöffnung 114 des Motorbauteils 100 verschweißt.

Diese Verschweißung ist jedoch auf Dauer nicht öldicht; ein Austreten von Öl durch den Zwischenraum zwischen dem Motorbauteil 100 und dem Einsatzelement 122 wird aber durch die Axialabdichtung mittels des ringförmigen Dichtelements 128 in der Nut 126 auf Dauer wirksam verhindert.

Das Dichtelement 128 erstreckt sich von der Dichtfläche 124 am Bund 148 des Einsatzelements 122 aus in der Axialrichtung 118 des Einsatzelements 122 bis zu der der Dichtfläche 124 gegenüberliegenden Nutgrundfläche 130, welche eine motorbauteilseitige weitere Dichtfläche bildet.

Die mittlere Oberflächennormale der Dichtfläche 124 ist parallel zur Axialrichtung 118 des Einsatzelements 122 gerichtet.

Dadurch, dass die Abdichtung zwischen dem Motorbauteil 100 und dem Einsatzelement 122 mittels des Dichtelements 128 als eine Axialabdichtung ausgebildet ist, kommt es - anders als bei einer Radialabdichtung - für die Wirksamkeit der Abdichtfunktion nicht darauf an, dass die Durchtrittsöffnung 114 im Motorbauteil 100 eine möglichst genau gearbeitete Bohrung ist.

Toleranzen bei der Ausbildung der Anlagefläche 120, in der die Nut 126 ausgebildet ist, und bei der Ausbildung der Nut 126 selbst können durch das elastisch verformbare Dichtelement 128 ohne weiteres ausgeglichen werden.

Ferner kann das Dichtelement 128 in Axialabdichtungsanordnung in einfacher Weise in die Nut 126 eingelegt werden, bevor das Einsatzelement 122 in die Durchtrittsöffnung 114 des Motorbauteils 100 eingeführt und mit dem Motorbauteil 100 verbunden wird.

Alternativ hierzu ist es auch möglich, das Dichtelement 128 direkt an das Motorbauteil 100, insbesondere die Ölwanne 102, anzuformen.

Anders als bei der herkömmlichen Radialabdichtungsanordnung muss das Dichtelement 128 also nicht zusammen mit dem Einsatzelement 122 in die Durchtrittsöffnung 114 des Motorbauteils 100 eingeführt werden, so dass eine Schädigung oder Verformung des Dichtelements 128 aufgrund von Reibung an der Begrenzungswand der Durchtrittsöffnung 114 ausgeschlossen ist.

## Patentansprüche

1. Dichtungsanordnung zum Abdichten einer Durchtrittsöffnung (114) in einer Wandung (104) eines Motorbauteils (100), umfassend das Motorbauteil (100),
ein Einsatzelement (122) zum Einsetzen in die Durchtrittsöffnung (114), wobei das Einsatzelement (122) einen Durchgangskanal (138) aufweist, welcher durch ein Verschlusselement (158) verschließbar ist, und
ein Dichtelement (128) zum Abdichten zwischen dem Einsatzelement (122) und dem Motorbauteil (100),
wobei das Dichtelement (128) im montierten Zustand der Dichtungsan-ordnung in Axialrichtung (118) des Durchgangskanals des Einsatzelements (122) zwischen dem Einsatzelement (122) und dem Motorbauteil (100) angeordnet ist, und wobei das Dichtelement (128) im montierten Zustand der Dichtungsanordnung in einer Nut (126) aufgenommen ist **dadurch gekennzeichnet, dass**,
die Nut (126) in einer im Wesentlichen senkrecht zu der Axialrichtung (118) des Durchgangskanals des Einsatzelements (122) ausgerichteten Anlagefläche (120) des Motorbauteils (100) ausgebildet ist, an welcher das Einsatzelement (122) im montierten Zustand der Dichtungsanordnung mit einer Dichtfläche (124) flächig anliegt, und wobei die Nut (126) eine der Dichtfläche (124) in der Axialrichtung (118) des Durchgangskanals des Einsatzelements (122) gegenüberliegende Nutgrundfläche (130) aufweist.

2. Dichtungsanordnung nach Anspruch 1, **dadurch gekennzeichnet, dass** das Dichtelement (128) im montierten Zustand der Dichtungsanordnung an einer Dichtfläche (124) des Einsatzelements (122) anliegt, welche quer zur Axialrichtung (118) des Durchgangskanals des Einsatzelements (122) ausgerichtet ist.

3. Dichtungsanordnung nach Anspruch 2, **dadurch gekennzeichnet, dass** die Dichtfläche (124) des Einsatzelements (122) im Wesentlichen senkrecht zur Axialrichtung (118) des Durchgangskanals des Einsatzelements (122) ausgerichtet ist.

4. Dichtungsanordnung nach einem der Ansprüche 1 bis 3, **dadurch gekennzeichnet, dass** das Dichtelement (128) im montierten Zustand der Dichtungsanordnung an einer Dichtfläche (124) des Einsatzelements (122) anliegt, deren mittlere Oberflächennormale im Wesentlichen parallel zur Axialrichtung (118) des Durchgangskanals des Einsatzelements (122) ausgerichtet ist.

5. Dichtungsanordnung nach einem der Ansprüche 1 bis 4, **dadurch gekennzeichnet, dass** das Einsatzelement (122) einen Grundkörper (136) und einen in radialer Richtung von dem Grundkörper (136) abstehenden Bund (148) umfasst.

6. Dichtungsanordnung nach Anspruch 5, **dadurch gekennzeichnet, dass** das Dichtelement (128) im montierten Zustand der Dichtungsanordnung an dem Bund (148) anliegt.

7. Dichtungsanordnung nach einem der Ansprüche 1 bis 6, **dadurch gekennzeichnet, dass** das Dichtelement (128) ringförmig ausgebildet ist.

8. Dichtungsanordnung nach einem der Ansprüche 1 bis 7, **dadurch gekennzeichnet, dass** das Dichtelement (128) ein längs einer Längsrichtung des Dichtelements (128) im Wesentlichen konstantes Profil aufweist.

9. Dichtungsanordnung nach einem der Ansprüche 1 bis 8, **dadurch gekennzeichnet, dass** das Dichtelement (128) ein O-Profil, ein Doppel-T-Profil oder ein Rechteck-Profil aufweist.

10. Dichtungsanordnung nach einem der Ansprüche 1 bis 9, **dadurch gekennzeichnet, dass** das Dichtelement (128) ein separat von dem Einsatzelement (122) ausgebildetes Element ist.

11. Dichtungsanordnung nach einem der Ansprüche 1 bis 10, **dadurch gekennzeichnet, dass** das Dichtelement (128) ein Elastomermaterial umfasst.

12. Dichtungsanordnung nach Anspruch 11, **dadurch gekennzeichnet, dass** das Dichtelement (128) einen Fluor-Kautschuk (FPM), einen Ethylen-Acrylat-Kautschuk (AEM), einen Polyacrylat-Kautschuk (ACM) und/oder einen Silikon-Kautschuk (MVQ) umfasst.

13. Dichtungsanordnung nach einem der Ansprüche 1 bis 12, **dadurch gekennzeichnet, dass** das Einsatzelement (122) ein metallisches Material umfasst.

14. Dichtungsanordnung nach Anspruch 13, **dadurch gekennzeichnet, dass** das Einsatzelement (122) Messing umfasst.

15. Dichtungsanordnung nach einem der Ansprüche 1 bis 14, **dadurch gekennzeichnet, dass** der Durchgangskanal (138) des Einsatzelements (122) mit einem Gewinde (140) versehen ist.

16. Dichtungsanordnung nach einem der Ansprüche 1 bis 15, **dadurch gekennzeichnet, dass** die Dichtungsanordnung ein Verschlusselement (158) zum Verschließen des Durchgangskanals (138) des Einsatzelements (122) umfasst.

17. Dichtungsanordnung nach Anspruch 16, **dadurch gekennzeichnet, dass** das Verschlusselement (158) mit einem Gewinde (168) versehen ist.

18. Dichtungsanordnung nach einem der Ansprüche 16 oder 17, **dadurch gekennzeichnet, dass** das Verschlusselement (158) als eine Verschlussschraube (160) ausgebildet ist.

19. Dichtungsanordnung nach einem der Ansprüche 16 bis 18, **dadurch gekennzeichnet, dass** das Verschlusselement (158) mit einem Abdichtelement (166) zum Abdichten zwischen dem Verschlusselement (158) und dem Einsatzelement (122) versehen ist.

20. Dichtungsanordnung nach einem der Ansprüche 16 bis 19, **dadurch gekennzeichnet, dass** das Verschlusselement (158) ein metallisches Material umfasst.

21. Dichtungsanordnung nach Anspruch 20, **dadurch gekennzeichnet, dass** das Verschlusselement (158) ein Stahlmaterial umfasst.

22. Dichtungsanordnung nach einem der Ansprüche 1 bis 21, **dadurch gekennzeichnet, dass** das Motorbauteil (100) ein Kunststoffmaterial umfasst.

23. Dichtungsanordnung nach Anspruch 22, **dadurch gekennzeichnet, dass** das Motorbauteil (100) Polyamid (PA) umfasst.

24. Dichtungsanordnung nach einem der Ansprüche 1 bis 23, **dadurch gekennzeichnet, dass** das Motorbauteil (100) als eine Motorölwanne (102), als eine Getriebeölwanne oder als eine Zylinderkopfhaube ausgebildet ist.

25. Dichtungsanordnung nach einem der Ansprüche 1 bis 24, **dadurch gekennzeichnet, dass** das Einsatzelement (122) durch Warmeinbettung mit dem Motorbauteil (100) verbunden ist.

## Claims

1. Gasket arrangement for sealing a through opening (114) in a wall (104) of
an engine component (100), comprising the engine component (100),
an insert element (122) for insertion into the through opening (114),
wherein the insert element (122) has a through-channel (138), which is closable by a closing element (158), and
a gasket element (128) for sealing between the insert element (122) and the engine component (100),
wherein in the assembled state of the gasket arrangement the gasket element (128) is arranged between the insert element (122) and the engine component (100) in axial direction (118) of the through-channel of the insert element (122), and wherein in the assembled state of the gasket arrangement the gasket element (128) is received in a groove (126),
**characterised in that**
the groove (126) is formed in an abutment surface (120) of the engine component (100) oriented substantially perpendicularly to the axial direction (118) of the through-channel of the insert element (122), the insert element (122) abutting flat against said abutment surface with a sealing surface (124) in the assembled state of the gasket arrangement, and wherein the groove (126) has a groove base surface (130) located opposite the sealing surface (124) in the axial direction (118) of the through-channel of the insert element (122).

2. Gasket arrangement according to claim 1, **characterised in that** in the assembled state of the gasket arrangement the gasket element (128) abuts against a sealing surface (124) of the insert element (122), which is oriented transversely to the axial direction (118) of the through-channel of the insert element (122).

3. Gasket arrangement according to claim 2, **characterised in that** the sealing surface (124) of the insert element (122) is oriented substantially perpendicularly to the axial direction (118) of the through-channel of the insert element (122).

4. Gasket arrangement according to one of claims 1 to 3, **characterised in that** in the assembled state of the gasket arrangement the gasket element (128) abuts against a sealing surface (124) of the insert element (122), the central surface normal of which is oriented substantially parallel to the axial direction (118) of the through-channel of the insert element (122).

5. Gasket arrangement according to one of claims 1 to 4, **characterised in that** the insert element (122) comprises a base body (136) and a flange (148) projecting in radial direction from the base body (136).

6. Gasket arrangement according to claim 5, **characterised in that** in the assembled state of the gasket arrangement the gasket element (128) abuts against the flange (148).

7. Gasket arrangement according to one of claims 1 to 6, **characterised in that** the gasket element (128) is annular.

8. Gasket arrangement according to one of claims 1 to 7, **characterised in that** the gasket element (128) has a substantially constant profile along a longitudinal direction of the gasket element (128).

9. Gasket arrangement according to one of claims 1 to 8, **characterised in that** the gasket element (128) has an O-shaped profile, a double-T-shaped profile or a rectangular profile.

10. Gasket arrangement according to one of claims 1 to 9, **characterised in that** the gasket element (128) is an element formed separately from the insert element (122).

11. Gasket arrangement according to one of claims 1 to 10, **characterised in that** the gasket element (128) comprises an elastomeric material.

12. Gasket arrangement according to claim 11, **characterised in that** the gasket element (128) comprises a fluor-rubber (FPM), an ethylene-acrylate-rubber (AEM), a polyacrylate-rubber (ACM) and/or a silicone-rubber (MVQ).

13. Gasket arrangement according to one of claims 1 to 12, **characterised in that** the insert element (122) comprises a metallic material.

14. Gasket arrangement according to claim 13, **characterised in that** the insert element (122) comprises brass.

15. Gasket arrangement according to one of claims 1 to 14, **characterised in that** the through-channel (138) of the insert element (122) is provided with a thread (140).

16. Gasket arrangement according to one of claims 1 to 15, **characterised in that** the gasket arrangement comprises a closure element (158) for closing the through-channel (138) of the insert element (122).

17. Gasket arrangement according to claim 16, **characterised in that** the closure element (158) is provided with a thread (168).

18. Gasket arrangement according to one of claims 16 or 17, **characterised in that** the closure element (158) is configured as a screw plug (160).

19. Gasket arrangement according to one of claims 16 to 18, **characterised in that** the closure element (158) is provided with a gasket element (166) for sealing between the closure element (158) and the insert element (122).

20. Gasket arrangement according to one of claims 16 to 19, **characterised in that** the closing element (158) comprises a metallic material.

21. Gasket arrangement according to claim 20, **characterised in that** the closing element (158) comprises a steel material.

22. Gasket arrangement according to one of claims 1 to 21, **characterised in that** the engine component (100) comprises a plastic material.

23. Gasket arrangement according to claim 22, **characterised in that** the engine component (100) comprises polyamide (PA).

24. Gasket arrangement according to one of claims 1 to 23, **characterised in that** the engine component (100) is configured as an engine oil sump (102), as a gear oil sump or as a cylinder head cover.

25. Gasket arrangement according to one of claims 1 to 24, **characterised in that** the insert element (122) is connected to the engine component (100) by hot embedding.

## Revendications

1. Agencement d'étanchéité destiné à rendre étanche une ouverture de passage (114) dans une paroi (104) d'un composant de moteur (100), comprenant
le composant de moteur (100),
un élément rapporté (122) à insérer dans l'ouverture de passage (114);
dans lequel l'élément rapporté (122) présente un canal de passage (138), qui peut être fermé par un élément de fermeture (158), et
un élément d'étan-chéité (128) pour assurer l'étanchéité entre l'élément rapporté (122) et le composant de moteur (100),
dans lequel l'élément d'étanchéité (128) est disposé, dans l'état monté de l'agencement d'étanchéité, en direction axiale (118) du canal de passage de l'élément rapporté (122) entre l'élément rapporté (122) et le composant de moteur (100), et
dans lequel l'élément d'étanchéité (128) est, dans l'état monté de l'agencement d'étanchéité, logé dans une rainure (126),
**caractérisé en ce que** la rainure (126) est pratiquée dans une face d'appui (120) du composant de moteur (100) orientée sensiblement perpendiculairement à la direction axiale (118) du canal de passage de l'élément rapporté (122), sur laquelle l'élément rapporté (122) s'appuie à plat par une face d'étanchéité (124) dans l'état monté de l'agencement d'étanchéité, et dans lequel la rainure (126) présente une face de fond de rainure (130) opposée à la face d'étanchéité (124) dans la direction axiale (118) du canal de passage de l'élément rapporté (122).

2. Agencement d'étanchéité selon la revendication 1, **caractérisé en ce que** l'élément d'étanchéité (128) s'appuie, dans l'état monté de l'agencement d'étanchéité, contre une face d'étanchéité (124) de l'élément rapporté (122), qui est orientée transversalement à la direction axiale (118) du canal de passage de l'élément rapporté (122).

3. Agencement d'étanchéité selon la revendication 2, **caractérisé en ce que** la face d'étanchéité (124) de l'élément rapporté (122) est orientée sensiblement perpendiculairement à la direction axiale (118) du canal de passage de l'élément rapporté (122).

4. Agencement d'étanchéité selon l'une quelconque des revendications 1 à 3, **caractérisé en ce que** l'élément d'étanchéité (128) s'appuie, dans l'état monté de l'agencement d'étanchéité, contre une face d'étanchéité (124) de l'élément rapporté (122), dont la normale centrale à la surface est orientée sensiblement parallèlement à la direction axiale (118) du canal de passage de l'élément rapporté (122).

5. Agencement d'étanchéité selon l'une quelconque des revendications 1 à 4, **caractérisé en ce que** l'élément rapporté (122) comprend un corps de base (136) et un rebord (148) saillant en direction radiale à partir du corps de base (136).

6. Agencement d'étanchéité selon la revendication 5, **caractérisé en ce que** l'élément d'étanchéité (128) s'appuie contre le rebord (148), dans l'état monté de l'agencement d'étanchéité.

7. Agencement d'étanchéité selon l'une quelconque des revendications 1 à 6, **caractérisé en ce que** l'élément d'étanchéité (128) est de forme annulaire.

8. Agencement d'étanchéité selon l'une quelconque des revendications 1 à 7, **caractérisé en ce que** l'élément d'étanchéité (128) présente un profil essentiellement constant le long d'une direction longitudinale de l'élément d'étanchéité (128).

9. Agencement d'étanchéité selon l'une quelconque des revendications 1 à 8, **caractérisé en ce que** l'élément d'étanchéité (128) présente un profil en O, un profil en double T ou un profil rectangulaire.

10. Agencement d'étanchéité selon l'une quelconque des revendications 1 à 9, **caractérisé en ce que** l'élément d'étanchéité (128) est un élément réalisé séparément de l'élément rapporté (122).

11. Agencement d'étanchéité selon l'une quelconque des revendications 1 à 10, **caractérisé en ce que** l'élément d'étanchéité (128) comprend un matériau élastomère.

12. Agencement d'étanchéité selon la revendication 11, **caractérisé en ce que** l'élément d'étanchéité (128) comprend un caoutchouc au fluor (FPM), un caoutchouc éthylène-acrylate (AEM), un caoutchouc polyacrylate (ACM) et/ou un caoutchouc silicone (MVQ).

13. Agencement d'étanchéité selon l'une quelconque des revendications 1 à 12, **caractérisé en ce que** l'élément rapporté (122) comprend un matériau métallique.

14. Agencement d'étanchéité selon la revendication 13, **caractérisé en ce que** l'élément rapporté (122) comprend du laiton.

15. Agencement d'étanchéité selon l'une quelconque des revendications 1 à 14, **caractérisé en ce que** le canal de passage (138) de l'élément rapporté (122) est muni d'un filet (140).

16. Agencement d'étanchéité selon l'une quelconque des revendications 1 à 15, **caractérisé en ce que** l'agencement d'étanchéité comprend un élément de fermeture (158) pour la fermeture du canal de passage (138) de l'élément rapporté (122).

17. Agencement d'étanchéité selon la revendication 16, **caractérisé en ce que** l'élément de fermeture (158) est muni d'un filet (168).

18. Agencement d'étanchéité selon la revendication 16 ou 17, **caractérisé en ce que** l'élément de fermeture (158) se présente sous la forme d'une vis de fermeture (160).

19. Agencement d'étanchéité selon l'une quelconque des revendications 16 à 18, **caractérisé en ce que** l'élément de fermeture (158) est muni d'un élément d'étanchéité (166) pour assurer l'étanchéité entre l'élément de fermeture (158) et l'élément rapporté (122).

20. Agencement d'étanchéité selon l'une quelconque des revendications 16 à 19, **caractérisé en ce que** l'élément de fermeture (158) comprend un matériau métallique.

21. Agencement d'étanchéité selon la revendication 20, **caractérisé en ce que** l'élément de fermeture (158) comprend un matériau en acier.

22. Agencement d'étanchéité selon l'une quelconque des revendications 1 à 21, **caractérisé en ce que** le composant de moteur (100) comprend un matériau en matière plastique.

23. Agencement d'étanchéité selon la revendication 22, **caractérisé en ce que** le composant de moteur (100) comprend du polyamide (PA).

24. Agencement d'étanchéité selon l'une quelconque des revendications 1 à 23, **caractérisé en ce que** le composant de moteur (100) se présente sous la forme d'un carter d'huile de moteur (102), d'un carter d'huile de boîte de vitesses ou d'un couvercle de culasse.

25. Agencement d'étanchéité selon l'une quelconque des revendications 1 à 24, **caractérisé en ce que** l'élément rapporté (122) est assemblé au composant de moteur (100) par encastrement à chaud.
